# EUROPÄISCHE PATENTSCHRIFT

(11) **EP 2 730 729 B1**
(45) Veröffentlichungstag und Bekanntmachung des Hinweises auf die Patenterteilung: **27.02.2019**
(21) Anmeldenummer: 13184105.8
(22) Anmeldetag: 12.09.2013
(51) Int. Cl.: E05B 83/28, E05B 77/06, E05C 5/00, B60R 7/04

(54) **Verriegelungsvorrichtung für ein Staufach und Staufach für ein Kraftfahrzeug**
Locking device for a storage compartment and storage compartment for a motor vehicle
Dispositif de verrouillage pour un compartiment de rangement et compartiment de rangement pour un véhicule automobile

(30) Priorität: 13.09.2012 DE 102012021641
(43) Veröffentlichungstag der Anmeldung: 14.05.2014
(73) Patentinhaber: Valeo Schalter und Sensoren GmbH, 74321 Bietigheim-Bissingen (DE)
(72) Erfinder: Haebler, Peter, 98704 Langewiesen (DE)

(56) Entgegenhaltungen:
- EP-A2- 1 657 112
- WO-A1-2007/058824
- DE-C1- 19 811 783
- US-A- 2 450 145
- US-A1- 2004 051 333
- US-A1- 2006 006 663
- US-A1- 2008 100 068

## Beschreibung

Die Erfindung betrifft eine Verriegelungsvorrichtung zum Verriegeln eines Staufachdeckels an einem Gehäuse, insbesondere für ein Kraftfahrzeug. Die Erfindung betrifft außerdem ein Staufach mit einer solchen Verriegelungsvorrichtung. Verriegelungsmechanismen für Staufächer sind aus dem Stand der Technik in vielfältiger Ausgestaltung bekannt. Bekannt sind beispielsweise Verriegelungsmechanismen, welche eine Führungsbahn in Form einer sogenannten "Herzkurve" aufweisen. Der Staufachdeckel ist hier mit einem Rastelement verbunden, welches in der Herzkurve verschiebbar geführt gelagert ist. Beim Drücken des Deckels wird das Rastelement entlang eines ersten Abschnitts der Führungsbahn geführt, und der Deckel kann geöffnet werden. Beim Schließen des Deckels hingegen wird das Rastelement entlang eines zweiten Abschnitts der Herzkurve geführt, an dessen Ende sich eine Aufnahme für das Rastelement befindet, in welcher das Rastelement beim geschlossenen Deckel gelagert wird. Solche Verriegelungsvorrichtungen haben jedoch insgesamt den Nachteil, dass sie für Kraftfahrzeuge nur bedingt geeignet sind. Aufgrund von starken Beschleunigungskräften kann das Rastelement nämlich aus der Aufnahme herausgeworfen werden und es kann zu einem Entriegeln des Staufachdeckels kommen.

Außerdem sind die bekannten Mechanismen relativ aufwendig aufgebaut.

Bekannte Verriegelungsvorrichtungen werden in den Dokumenten EP 1657112 A2, US 2008/0100068 A1 und US 2006/0006663 A1 offenbart.

Es ist Aufgabe der Erfindung, eine Verriegelungsvorrichtung zum Verriegeln eines Staufachdeckels an einem Gehäuse zu schaffen, welche auch bei hohen Beschleunigungskräften eine zuverlässige Verriegelung des Deckels gewährleistet.

Diese Aufgabe wird erfindungsgemäß durch eine Verriegelungsvorrichtung sowie durch ein Staufach mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Eine erfindungsgemäße Verriegelungsvorrichtung ist zum Verriegeln eines Staufachdeckels an einem Gehäuse eines Staufachs ausgebildet und umfasst ein erstes Rastelement sowie ein zweites Rastelement. Das erste Rastelement ist am Staufachdeckel angeordnet. Das zweite Rastelement ist in einer Führungsbahn des Gehäuses verschiebbar geführt aufgenommen und an einem Hebel angeordnet, so dass es zusammen mit dem Hebel mitbewegbar ist. Der Hebel ist an einem Betätigungsteil bzw. einer Taste schwenkbar angeordnet. Das Betätigungsteil ist zusammen mit dem Hebel und dem zweiten Rastelement relativ zum Gehäuse aus einer Ausgangsstellung-insbesondere gegen eine Federkraft - in eine Betätigungsstellung verbringbar, nämlich insbesondere durch eine Bedienperson. In der Ausgangsstellung des Betätigungsteils ist das zweite Rastelement in einer Rastposition in der Führungsbahn angeordnet und mit dem ersten Rastelement unter Vorspannung mit einer Federkraft verrastet. In der Betätigungsstellung des Betätigungsteils hingegen ist das zweite Rastelement in einer Freigabeposition in der Führungsbahn angeordnet und gibt das erste Rastelement zum Öffnen des Staufachdeckels frei. Der Staufachdeckel kann dann beispielsweise mit Hilfe der Federkraft und/oder aufgrund der Gravitation geöffnet werden.

Durch die federbelastete Verrastung der beiden Rastelemente miteinander wird eine besonders zuverlässige Verriegelung des Staufachdeckels gewährleistet, welche selbst sehr hohen Beschleunigungskräften standhalten kann. Diese besonders zuverlässige Verriegelung kann auch ohne viel Aufwand wieder gelöst werden, indem das Betätigungsteil, welches als eine Taste fungiert, aus der Ausgangsstellung in die Betätigungsstellung bewegt wird. Dann bewegt sich gleichzeitig auch das zweite Rastelement in der Führungsbahn des Gehäuses, und zwar aus der Rastposition in die Freigabeposition, in welcher das mit dem Staufachdeckel verbundene erste Rastelement zum Öffnen des Staufachdeckels freigegeben wird. Die erfindungsgemäße Verriegelungsvorrichtung ermöglicht auch ein einfaches Schließen und Verriegeln des Staufachdeckels, indem beim Schließen des Deckels die beiden Rastelemente wieder miteinander verrasten. Nicht zuletzt kann die Vorrichtung weniger aufwendig als die bekannten Mechanismen mit einer Herzkurve aufgebaut werden.

Beim Schließen des Staufachdeckels wird also das Betätigungsteil gegen die Federkraft aus der Ausgangsstellung in die Betätigungsstellung unter Zusammenwirken der Rastelemente und somit mittels des Deckels bewegt, so dass die Rastelemente miteinander verrastet werden. Beim Schließen des Staufachdeckels wird somit zusammen mit dem Betätigungsteil auch das zweite Rastelement aus der Rastposition in die Freigabeposition mittels des ersten Rastelements bzw. unter Zusammenwirken der beiden Rastelemente bewegt, so dass das erste Rastelement das zweite passieren kann und somit zum Schließen des Staufachdeckels freigegeben wird. Wird der Deckel geschlossen, so kehrt das Betätigungsteil unter der Federkraft wieder in die Ausgangsstellung und das zweite Rastelement wieder in die Rastposition zurück, in welcher die beiden Rastelemente miteinander verrastet werden. Das Verriegeln des Staufachdeckels erfolgt somit besonders leicht alleine durch Schließen des Deckels bzw. durch Bewegen des Deckels aus seiner Öffnungsstellung in seine Schließstellung.

Vorzugsweise ist das Betätigungsteil als Drucktaste ausgebildet, welche zum Öffnen des Staufachdeckels durch eine Bedienperson gedrückt und somit geradlinig bewegt werden kann. Das Entriegeln des Deckels und somit auch das Öffnen des Deckels erfolgt somit besonders einfach durch Drücken der Drucktaste.

Bevorzugt ist eines der Rastelemente, nämlich insbesondere das erste Rastelement, in Form eines Hakens ausgebildet. Das andere Rastelement, nämlich insbesondere das zweite Rastelement, ist hingegen bevorzugt als Führungsbolzen ausgebildet. Der Haken kann somit am Staufachdeckel angeordnet sein, während der Bolzen an dem Hebel angeordnet und in der Führungsbahn des Gehäuses verschiebbar geführt aufgenommen sein kann. Somit ist eine zuverlässige Verriegelung des Deckels gewährleistet, ohne dass bewegliche Elemente an dem Deckel selbst angebracht zu werden brauchen.

In einer Ausführungsform ist vorgesehen, dass das erste Rastelement starr mit dem Staufachdeckel verbunden ist. Somit kann dieses erste Rastelement beim Schließen des Deckels das zweite Rastelement aus seiner Rastposition in die Freigabeposition in der Führungsbahn verbringen bzw. verschieben und somit das zweite Rastelement passieren, so dass ein einfaches und zuverlässiges Verriegeln des Deckels möglich ist. Des Weiteren kann der Deckel somit auch frei von beweglichen Elementen und folglich auch frei von einer entsprechenden Mechanik ausgebildet werden.

Vorzugsweise verläuft die Führungsbahn des Gehäuses bezüglich der Bewegungsrichtung des Betätigungsteils unter einem Winkel, der größer als 5°, insbesondere größer als 20° ist. Dieser Winkel kann beispielsweise in einem Wertebereich von 20° bis 60° liegen. Somit ist einerseits eine kraftvolle Verrastung der beiden Rastelemente unter der Federkraft und somit eine zuverlässige Verriegelung des Deckels gewährleistet. Andererseits ist der Betätigungsweg des Betätigungsteils bzw. der Abstand zwischen der Ausgangsstellung und der Betätigungsstellung optimal eingestellt.

Ein erfindungsgemäßes Staufach für ein Kraftfahrzeug umfasst eine erfindungsgemäße Verriegelungsvorrichtung. Das Staufach ist beispielsweise ein Brillenfach, welches zur Aufnahme einer Brille ausgebildet ist. Das Staufach kann beispielsweise an einem Fahrzeughimmel im Innenraum des Kraftfahrzeugs angeordnet sein.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1 bis 4: in schematischer Darstellung eine Verriegelungsvorrichtung gemäß einer Ausführungsform der Erfindung, wobei der Vorgang des Öffnen eines Staufachdeckels näher erläutert wird; und
- Fig. 5 bis 9: in schematischer Darstellung die Verriegelungsvorrichtung, wobei der Vorgang des Schließens des Staufachdeckels näher erläutert wird.

In den Figuren ist eine Verriegelungsvorrichtung 1 bzw. ein Verriegelungsmechanismus gemäß einer Ausführungsform der Erfindung dargestellt. Gezeigt ist dabei jeweils eine Seitenansicht auf den Verriegelungsmechanismus 1. Diese Verriegelungsvorrichtung 1 dient zum Verriegeln eines Staufachdeckels 2 eines Staufachs an einem Gehäuse 3 des Staufachs. Das Staufach ist im Innenraum eines Kraftfahrzeugs angeordnet und beispielsweise als Brillenfach ausgebildet, in welchem eine Struktur zur Aufnahme einer Brille ausgebildet ist.

Von dem Staufachdeckel 2 alleine sind in den Fig. lediglich Bereiche bzw. Ausschnitte dargestellt und mit 2 bezeichnet. Zum Staufachdeckel 2 gehört auch ein erstes Rastelement 4, welches in Form eines Hakens, etwa eines Angelhakens, ausgebildet ist. Dieses erste Rastelement 4 ist mit dem Staufachdeckel 2 bewegungsfest und starr verbunden und vorzugsweise einstöckig mit dem Staufachdeckel 2 ausgebildet.

Die Verriegelungsvorrichtung 1 umfasst außerdem ein zweites Rastelement 5, welches als Führungsbolzen ausgeführt ist. Das zweite Rastelement 5 ist an einem Ende eines Hebels 6 fest angebracht und einstöckig mit dem Hebel 6 ausgebildet. Am anderen Ende ist der Hebel 6 über einen Bolzen 7 oder dergleichen schwenkbar an einem Betätigungsteil 8 gelagert. Der Hebel 6 befindet sich dabei innerhalb des Gehäuses 3 und liegt beispielsweise an einer inneren Fläche einer Gehäusewand an. Das zweite Rastelement 5 ist in einer Führungsbahn 9 verschiebbar geführt aufgenommen und gelagert, welche in der Gehäusewand des Gehäuses 3 ausgebildet ist.

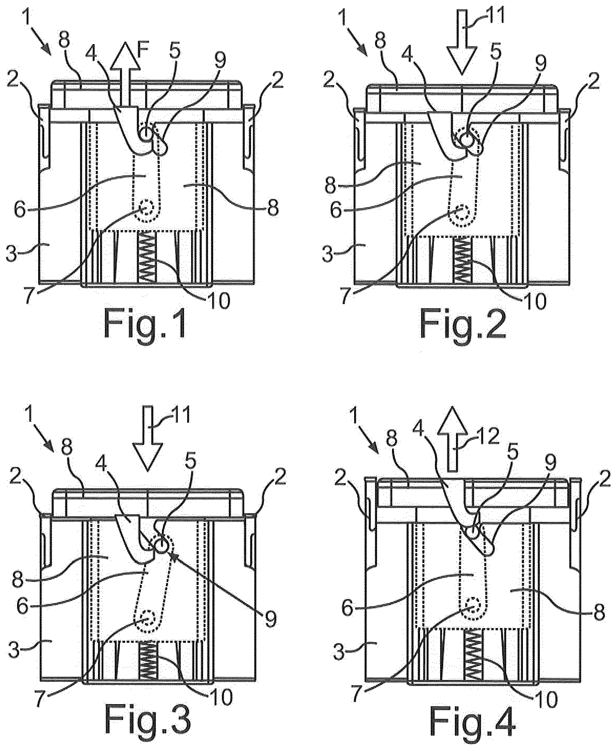

Das Betätigungsteil 8 ist in Form einer Drucktaste bereitgestellt, welche zwischen einer in Fig. 1 gezeigten Ausgangsstellung und einer in Fig. 3 dargestellten Betätigungsstellung bewegbar ist und hierbei aus der Ausgangsstellung in die Betätigungsstellung gedrückt werden kann. Das Drücken des Betätigungsteils 8 erfolgt gegen eine Federkraft, welche mittels einer Druckfeder 10 bereitgestellt wird. Das Betätigungsteil 8 ist im Gehäuse 3 verschiebbar gelagert und über die Druckfeder 10 an einer Wand abgestützt. In der Ausgangsstellung ist das Betätigungsteil 8 mit der Federkraft vorgespannt, so dass die Druckfeder 10 das Betätigungsteil 8 beispielsweise gegen einen Anschlag drückt und somit das Betätigungsteil 8 in der Ausgangsstellung mit der Federkraft hält.

Die Führungsbahn 9 ist schräg zur Bewegungsrichtung des Betätigungsteils 8 orientiert. Die Führungsbahn 9 ist z. B. geradlinig ausgebildet und verläuft bezüglich der Betätigungsrichtung des Betätigungsteils 8 beispielsweise unter einem Winkel zwischen 20° und 50°. Beim Drücken des Betätigungsteils 8 bewegt sich somit auch das zweite Rastelement 5 aus seiner in Fig. 1 dargestellten Rastposition in eine in Fig. 3 gezeigte Freigabeposition am anderen Ende der Führungsbahn 9. Nach Loslassen des Betätigungsteils 8 gelangt dieses selbsttätig wieder in seine Ausgangsposition aufgrund der Federkraft der Druckfeder 10, so dass auch das zweite Rastelement 5 in seine ursprüngliche Rastposition zurückkehrt.

Das Betätigungsteil 8 ist somit ein von dem Deckel 2 und dem ersten Rastelement 4 separates Element.

Der Staufachdeckel 2 kann an dem Gehäuse 3 beispielsweise schwenkbar und/oder verschiebbar gelagert sein. Vorzugsweise dient der Deckel 2 dabei zum Verschließen einer Öffnung des Gehäuses 3.

Die Funktionsweise der Verriegelungsweise wird nachfolgend näher erläutert.

In den Fig. 1 bis 4 ist dabei der Vorgang des Öffnens des Staufachdeckels 2 dargestellt. Gemäß Fig. 1 ist der Deckel 2 am Gehäuse 3 verriegelt und die beiden Rastelemente 4, 5 sind miteinander verrastet. Der Haken umgreift nämlich das zweite Rastelement 5, wobei die Aufnahme bzw. die Einbuchtung des Hakens an die geometrische Form und an die Größe des zweiten Rastelements 5 angepasst ist. Die beiden Rastelemente 4, 5 sind dabei unter einer Federkraft F miteinander verrastet, welche z. B. mittels einer anderen Feder auf den Staufachdeckel 2 aufgebracht wird und den Deckel 2 in seine Öffnungsstellung drückt oder zieht. Wird nun das Betätigungsteil 8 gemäß der Pfeildarstellung 11 gedrückt, wie dies in Fig. 2 dargestellt ist, so bewegt sich zusammen mit dem Betätigungsteil 8 auch das zweite Rastelement 5 innerhalb der Führungsbahn 9 und wird ein wenig gegen das hakenförmige erste Rastelement 4 gedrückt. Das zweite Rastelement 5 gelangt dann in die Freigabeposition in der Führungsbahn 9, so dass das erste Rastelement 4 freigegeben wird. Nach Freigabe des ersten Rastelements 4 wird der Staufachdeckel 2 mit der Federkraft F geöffnet und somit in seine Öffnungsstellung verbracht. Nach Loslassen des Betätigungsteils 8 gelangt selbiges wieder in die Ausgangsstellung zurück, so dass auch das zweite Rastelement 5 wieder in seine Rastposition zurückkehrt, wobei nun keine Verrastung mit dem ersten Rastelement 4 gegeben ist. Gemäß Fig. 4 wird der Staufachdeckel 2 zusammen mit dem ersten Rastelement 4 geöffnet, so dass sich das erste Rastelement 4 von dem zweiten Rastelement 5 entfernt, nämlich gemäß der Pfeildarstellung 12.

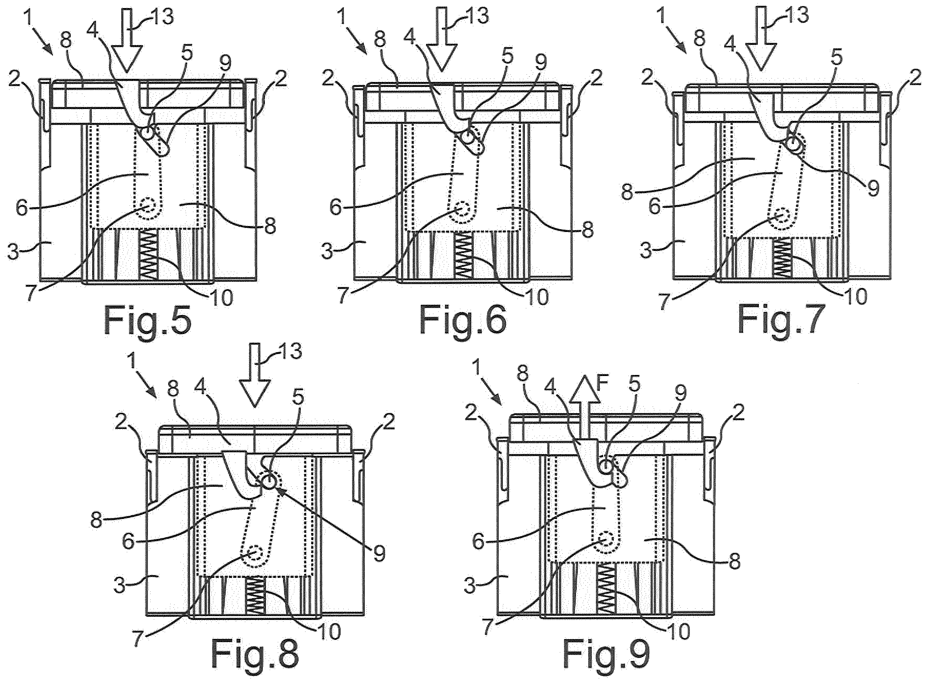

In den Fig. 5 bis 9 ist der Vorgang des Schließens des Staufachdeckels 2 dargestellt. Das Schließen des Deckels 2 erfolgt durch Bewegen des Deckels 2 aus seiner Öffnungsstellung in seine Schließstellung in Richtung zum Gehäuse 3. Diese Bewegung führt die Bedienperson gemäß dem Pfeil 13 durch. Durch das Schließen des Deckels 2 wird das Betätigungsteil 8 gegen die Federkraft der Druckfeder 10 wieder aus der Ausgangsstellung in die Betätigungsstellung verbracht. Dabei wirken die beiden Rastelemente 4, 5 zusammen und das erste Rastelement 4 drückt das zweite Rastelement 5 aus der Rastposition in Richtung zur Freigabeposition. Durch das Drücken des Rastelements 5 innerhalb der Führungsbahn 9 wird gleichzeitig auch das Betätigungsteil 8 in das Gehäuse 3 hineingedrückt, wie dies in den Fig. 5 bis 7 dargestellt ist. Gemäß den Fig. 7 und 8 passiert das erste Rastelement 4 das zweite Rastelement 5 und wird an dem zweiten Rastelement 5 vorbeibewegt, bis es sich in Betätigungsrichtung des Betätigungsteils 8 hinter dem zweiten Rastelement 5 befindet (Fig. 8). Nachdem das erste Rastelement 4 das zweite Rastelement 5 passiert hat, wird das zweite Rastelement 5 frei gegeben, und das Betätigungsteil 8 springt zusammen mit dem zweiten Rastelement 5 wieder in die Ausgangsstellung bzw. die Rastposition zurück. Nach Loslassen des Deckels 2 wirkt auf den Deckel 2 wieder die Federkraft F, so dass die beiden Rastelemente 4, 5 unter der Federkraft F miteinander verrasten. Die in den Fig. 5 bis 8 gezeigte Pfeildarstellung 13 veranschaulicht dabei schematisch das Drücken des Deckels 2 in seine Schließstellung durch eine Bedienperson. Wird der Deckel 2 gemäß Fig. 2 wieder losgelassen, werden die beiden Rastelemente 4, 5 miteinander verrastet, und es wirkt wieder die Federkraft F.

## Patentansprüche

1. Verriegelungsvorrichtung (1) zum Verriegeln eines Staufachdeckels (2) an einem Gehäuse (3), mit einem am Staufachdeckel (2) angeordneten ersten Rastelement (4) und einem zweiten Rastelement (5), das in einer Führungsbahn (9) des Gehäuses (3) verschiebbar geführt aufgenommen ist und an einem Hebel (6) angeordnet ist, der an einem Betätigungsteil (8) schwenkbar angeordnet ist, wobei das Betätigungsteil (8) zusammen mit dem Hebel (6) relativ zum Gehäuse (3) aus einer Ausgangsstellung, in welcher das zweite Rastelement (5) in einer Rastposition in der Führungsbahn (9) angeordnet und mit dem ersten Rastelement (4) unter Vorspannung mit einer Federkraft verrastet ist, gegen die Federkraft in eine Betätigungsstellung verbringbar ist, in welcher das zweite Rastelement (5) in einer Freigabeposition in der Führungsbahn (9) angeordnet ist und das erste Rastelement (4) zum Öffnen des Staufachdeckels (2) freigibt.

2. Verriegelungsvorrichtung (1) nach Anspruch 1,
**dadurch gekennzeichnet, dass**
beim Schließen des Staufachdeckels (2) das Betätigungsteil (8) gegen die Federkraft aus der Ausgangsstellung in die Betätigungsstellung unter Zusammenwirken der Rastelemente (4, 5) bewegbar und hierdurch die Rastelemente (4, 5) miteinander verrastbar sind.

3. Verriegelungsvorrichtung (1) nach Anspruch 1 oder 2,
**dadurch gekennzeichnet, dass**
das Betätigungsteil (8) als Drucktaste ausgebildet ist, welche zum Öffnen des Staufachdeckels (2) drückbar ist.

4. Verriegelungsvorrichtung (1) nach einem der vorhergehenden Ansprüche,
**dadurch gekennzeichnet, dass**
eines der Rastelemente (4, 5), insbesondere das erste Rastelement (4), als Haken ausgebildet ist.

5. Verriegelungsvorrichtung (1) nach einem der vorhergehenden Ansprüche,
**dadurch gekennzeichnet, dass**
eines der Rastelemente (4, 5), insbesondere das zweite Rastelement (5), als Bolzen ausgebildet ist.

6. Verriegelungsvorrichtung (1) nach einem der vorhergehenden Ansprüche,
**dadurch gekennzeichnet, dass**
das erste Rastelement (4) starr mit dem Staufachdeckel (2) verbunden ist.

7. Verriegelungsvorrichtung (1) nach einem der vorhergehenden Ansprüche,
**dadurch gekennzeichnet, dass**
die Führungsbahn (9) unter einem Winkel größer als 5°, insbesondere größer als 20°, bezüglich der Bewegungsrichtung des Betätigungsteils (8) orientiert ist.

8. Staufach für ein Kraftfahrzeug, mit einer Verriegelungsvorrichtung (1) nach einem der vorhergehenden Ansprüche.

9. Staufach nach Anspruch 8, welches als Brillenfach ausgebildet ist.

## Claims

1. Locking device (1) for locking a storage compartment cover (2) to a housing (3), with a first latching element (4) arranged on the storage compartment cover (2) and with a second latching element (5) which is accommodated in a manner guided displaceably in a guide track (9) of the housing (3) and is arranged on a lever (6) which is arranged pivotably on an actuating part (8), wherein the actuating part (8) together with the lever (6) can be brought relative to the housing (3) from a starting position, in which the second latching element (5) is arranged in a latching position in the guide track (9) and is latched to the first latching element (4) with prestressing by a spring force, counter to the spring force into an actuating position in which the second latching element (5) is arranged in a release position in the guide track (9) and releases the first latching element (4) in order to open the storage compartment cover (2).

2. Locking device (1) according to Claim 1, **characterized in that**, during the closing of the storage compartment cover (2), the actuating part (8) can be moved counter to the spring force from the starting position into the actuating position with interaction of the latching elements (4, 5) and the latching elements (4, 5) can thereby be latched to each other.

3. Locking device (1) according to Claim 1 or 2, **characterized in that** the actuating part (8) is in the form of a pushbutton which can be pressed in order to open the storage compartment cover (2).

4. Locking device (1) according to one of the preceding claims, **characterized in that** one of the latching elements (4, 5), in particular the first latching element (4), is in the form of a hook.

5. Locking device (1) according to one of the preceding claims, **characterized in that** one of the latching elements (4, 5), in particular the second latching element (5), is in the form of a bolt.

6. Locking device (1) according to one of the preceding claims, **characterized in that** the first latching element (4) is connected rigidly to the storage compartment cover (2).

7. Locking device (1) according to one of the preceding claims, **characterized in that** the guide track (9) is oriented at an angle greater than 5°, in particular greater than 20°, with respect to the direction of movement of the actuating part (8).

8. Storage compartment for a motor vehicle, with a locking device (1) according to one of the preceding claims.

9. Storage compartment according to Claim 8, which is in the form of a compartment for a pair of spectacles.

## Revendications

1. Dispositif de verrouillage (1) servant à verrouiller un couvercle de compartiment de rangement (2) sur un boîtier (3), le dispositif de verrouillages comprenant un premier élément d'encliquetage (4) disposé sur le couvercle de compartiment de rangement (2) et un deuxième élément d'encliquetage (5) qui est reçu de manière guidée de façon coulissante dans une glissière de guidage (9) du boîtier (3) et est disposé sur un levier (6) qui est disposé de manière pivotante sur une partie d'actionnement (8), la partie d'actionnement (8) pouvant, conjointement avec le levier (6), être amenée, par rapport au boîtier (3), d'une position de départ dans laquelle le deuxième élément d'encliquetage (5) est disposé dans une position d'encliquetage dans la glissière de guidage (9) et encliqueté avec le premier élément d'encliquetage (4) sous précontrainte par une force de ressort à une position d'actionnement, à l'encontre de la force de ressort, position d'actionnement dans laquelle le deuxième élément d'encliquetage (5) est disposé dans une position de libération dans la glissière de guidage (9) et libère le premier élément d'encliquetage (4) pour ouvrir le couvercle de compartiment de rangement (2).

2. Dispositif de verrouillage (1) selon la revendication 1,
**caractérisé en ce que**,
lors de la fermeture du couvercle de compartiment de rangement (2), la partie d'actionnement (8) peut être déplacée, à l'encontre de la force de ressort, de la position de départ à la position d'actionnement par coopération des éléments d'encliquetage (4, 5) et les éléments d'encliquetage (4, 5) peuvent ainsi être encliquetés entre eux.

3. Dispositif de verrouillage (1) selon la revendication 1 ou 2,
**caractérisé en ce que**
la partie d'actionnement (8) est réalisée sous forme de bouton-poussoir, lequel peut être enfoncé pour ouvrir le couvercle de compartiment de rangement (2).

4. Dispositif de verrouillage (1) selon l'une quelconque des revendications précédentes,
**caractérisé en ce que**
l'un des éléments d'encliquetage (4, 5), en particulier le premier élément d'encliquetage (4), est réalisé sous forme de crochet.

5. Dispositif de verrouillage (1) selon l'une quelconque des revendications précédentes, **caractérisé en ce que**
l'un des éléments d'encliquetage (4, 5), en particulier le deuxième élément d'encliquetage (5), est réalisé sous forme de broche.

6. Dispositif de verrouillage (1) selon l'une quelconque des revendications précédentes,
**caractérisé en ce que**
le premier élément d'encliquetage (4) est relié rigidement au couvercle de compartiment de rangement (2).

7. Dispositif de verrouillage (1) selon l'une quelconque des revendications précédentes,
**caractérisé en ce que**
la glissière de guidage (9) est orientée par rapport à la direction de déplacement de la partie d'actionnement (8) suivant un angle supérieur à 5°, en particulier supérieur à 20°.

8. Compartiment de rangement pour un véhicule automobile, comprenant un dispositif de verrouillage (1) selon l'une quelconque des revendications précédentes.

9. Compartiment de rangement selon la revendication 8, lequel est réalisé sous forme de compartiment à lunettes.
